(19) Europäisches Patentamt
European Patent Office
Office européen des brevets

(11) EP 0 838 495 B1

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(51) Int Cl.:
*C08K 13/02* (2006.01) *C08L 57/08* (2006.01)

(21) Anmeldenummer: **97118197.9**

(22) Anmeldetag: **20.10.1997**

(54) **Stabilisatorkombination für thermoplastische Harzzusammensetzungen**

Stabilizer combination for thermoplastic resin compositions

Combinaison de stabilisants pour compositions de résines thermoplastiques

(84) Benannte Vertragsstaaten:
**AT BE DE DK ES FI FR GB GR IT NL SE**

(30) Priorität: **23.10.1996 DE 19644129**

(43) Veröffentlichungstag der Anmeldung:
**29.04.1998 Patentblatt 1998/18**

(73) Patentinhaber: **Baerlocher GmbH**
**85716 Unterschleissheim (DE)**

(72) Erfinder:
- **Rosenthal, Michael, Dr.**
  **80801 München (DE)**
- **Reith, Walter, Dr.**
  **82281 Egenhofen (DE)**
- **Forster, Stefan Dr.**
  **49835 Löhne (DE)**

(74) Vertreter: **Fiesser, Gerold Michael**
**KNH Patentanwälte**
**Kahlhöfer, Neumann, Herzog, Fiesser**
**Postfach 26 02 32**
**80059 München (DE)**

(56) Entgegenhaltungen:
**WO-A-91/08984** **WO-A-92/15545**
**DE-A- 4 134 325**

- **DATABASE WPI Section Ch, Week 9333 Derwent Publications Ltd., London, GB; Class A14, AN 93-261799 XP002053507 & JP 05 179 090 A (ASAHI DENKA KOGYO KK) , 20.Juli 1993**
- **DATABASE WPI Section Ch, Week 9012 Derwent Publications Ltd., London, GB; Class A60, AN 90-088736 XP002053508 ANONYMOUS: "Stabiliser system for chlorine contg. polymers, e.g. PVC - comprising zinc stabiliser and zinc- or magnesium-hydrotalcite, useful in e.g. window frame compsns." & RESEARCH DISCLOSURE, Bd. 310, Nr. 103, 10.Februar 1990, EMSWORTH, GB,**

EP 0 838 495 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft eine Stabilisatorkombination für bewitterungsstabile halogenhaltige thermoplastische Harzzusammensetzungen, insbesondere auf Polyvinylchlorid-(PVC)-Basis.

Halogenhaltige Polymere unterliegen chemischen Abbaureaktionen durch Einwirkung von UV-Strahlung, Licht und/oder Wärme, die zu nachhaltigen Beeinträchtigungen der Gebrauchseigenschaften führen. Insbesondere neigen extrudierte PVC-Formteile bei Bestrahlung oder Wärme und unter dem Einfluß von Wasser zu Abbaureaktionen, die vor allem zu einer Verschlechterung der Farbe führen. Um diese unerwünschten langfristigen Abbaureaktionen der PVC-Polymerketten zu verhindern, werden in die thermoplastischen Polymermassen seit langem sogenannte Stabilisatoren eingearbeitet.

Bei der Herstellung von Formteilen aus Hart-PVC für den Außenbereich, wie Fensterprofilen, Rohren und Platten, werden wegen der hohen Anforderungen, die an diese Formteile bezüglich ihrer Bewitterungsstabilität gestellt werden, und aufgrund ihrer guten Stabilisierungseigenschaften üblicherweise schwermetallhaltige Stabilisatoren eingesetzt. Da Schwermetalle, wie Cadmium oder Blei, aus gewerbehygienischen sowie umweltpolitischen Gründen zur Stabilisierung von Hart-PVC immer weniger verwendet werden, versucht man diese Stabilisatoren in halogenhaltigen-Polymeren in zunehmendem Maße durch physiologisch unbedenkliche Stabilisierungssysteme auf Basis von Calcium- oder Zinkverbindungen zu ersetzen. Diese sogenannten Ca/Zn-Stabilisatoren neigen jedoch in der Freibewitterung oftmals zu starker Kreidung und führen bei daraus hergestellten Formkörpern nach längerer Bewitterung vielfach zu einer auffälligen Gelbverfärbung.

Die bekannten Ca/Zn-Stabilisatorsysteme sind deshalb insbesondere für weiße Hart-PVC-Formkörper für den Außenbereich, wie PVC-Fensterprofile, bezüglich Bewitterungsbeständigkeit, Lichtstabilität und Oberflächenbeschaffenheit gestellt werden, nur unzureichend.

Aus der EP-B-424572 ist bekannt, daß durch den partiellen Ersatz von $TiO_2$ durch ZnS die Bewitterungsstabilität von blei- und cadmiumstabilisatorfreien Hart-PVC-Formkörpern verbessert wird. Durch Verwendung dieser Kombination wird jedoch der Schwermetallgehalt der PVC-Formmasse erhöht.

Aus der DE-C-3019632 ist zudem die Verwendung von Hydrotalciten der Formel $Mg_{1-x}Al_x(OH)_2A_{x/n}{}^{n-} \cdot mH_2O$ zur Inhibierung des thermischen Ultraviolett-Abbaus von thermoplastischen Harzen bekannt. Es hat sich aber gezeigt, daß die aus DE-C-3019632 bekannten Hydrotalcite in ihren Stabilisierungseigenschaften, vor allem im Hinblick auf die Bewitterungsstabilität, nicht die erwünschte Qualität erreichen.

Auch andere Stabilisatorkombinationen vom Hydrotalcittyp, wie sie z . B. in EP-B-189899 als $[(M_1^{2+})_{y1}(M_2^{2+})_{y2}]_{1-x}M_x^{3+}(OH)_2A_{x/n}{}^{n-} \cdot mH_2O$ beschrieben sind, können die hohen Anforderungen an die Bewitterungsstabilität der Formteile nicht oder nur unzureichend befriedigen.

Aus DE-C-3843581 ist eine Halogen enthaltende thermoplastische Harzzusammensetzung bekannt, die als Stabilisatorkombination eine Metallseife, ein Ethylen/Vinylacetat-Copolymer-Hydrolysat und einen Hydrotalcit enthält.

Bekanntermaßen neigen PVC-Formmassen mit Hydrotalciten als Stabilisatoren bei der Verarbeitung zur Bildung von Bläschen durch freiwerdendes $CO_2$ und/oder Kristallwasser. Diese Bläschenbildung führt zu Problemen bei der Herstellung von Formkörpern, bei deren Weiterverarbeitung bzw. deren Gebrauch.

Die DE-A-4134325 offenbart Verfahren zur Stabilisierung von Polymerisaten auf Basis chlorhaltiger Olefine und Mittel zur Durchführung des Verfahrens.

Die WO-A-9108984 beschreibt basische Calcium-Aluminium-Hydroxy-Phosphite zur Verwendung als Stabilisatoren für halogenhaltige Polymere.

Die WO-A-9215545 beschreibt basische Calcium-Aluminium-Hydroxid-Dicarboxylate zur Verwendung als Stabilisatoren für halogenhaltige thermoplastische Harze.

Aus EP-B-256872 ist bekannt, daß bei Verwendung von Hydrotalciten zur Verhinderung von Blasen Magnesiumoxid eingesetzt werden kann. Die Blasenbildung wird jedoch durch die Verwendung des Magnesiumoxids nicht wesentlich verhindert. Aus der EP-A-432495 ist zudem bekannt, die Blasenbildung von Hydrotalcitformulierungen durch Trocknung des Hydrotalcits bei höheren Temperaturen und anschließendes Einschmelzen in hydrophobierende Mittel zu reduzieren. Jedoch wird durch dieses Verfahren die Kristallstruktur des Hydrotalcits geschädigt und damit die stabilisierende Wirkung beeinträchtigt.

Der Erfindung liegt die Aufgabe zugrunde, eine Stabilisatorkombination für halogenhaltige thermoplastische Harze zur Verfügung zu stellen, die im Vergleich zu den bekannten Formulierungen eine hohe Langzeitbewitterungsstabilität, gute Farbhaltung sowie eine geringe Bläschenbildung während der Verarbeitung aufweist und vorzugsweise für den Einsatz in-Hart-PVC für den Außenbereich, z.B. für Fensterprofile, geeignet ist.

Diese Aufgabe wird erfindungsgemäß gelöst durch eine Stabilisatorkombination für halogenhaltige thermoplastische Harze, umfassend

(a) mindestens einen natürlichen oder synthetischen Hydrotalcit, der gegebenenfalls oberflächenmodifiziert ist,

(b) mindestens eine basische Calcium-Aluminium-Hydroxyverbindung, gewählt aus

(b1) basischen Calcium-Aluminium-Hydroxyphosphiten der allgemeinen Formel (I)

$$Ca_xAl_2(OH)_{2(x+3-y)}(HPO_3)_y\bullet mH_2O \qquad (I)$$

worin

$$2 \leq x \leq 12,$$

$\frac{2x+5}{2} > y > 0$ und
$0 \leq m \leq 12$ bedeutet,
ausgenommen y=1, wenn $2 \leq x \leq 8$ ist;
und/oder

($b_2$) basischen Calcium-Aluminium-Hydroxycarboxylaten der allgemeinen Formel (II)

$$Ca_xAl_2\,(OH)_{[(2x+6)-y]}A_{y/n}^{n-}\bullet mH_2O \qquad (II))$$

worin

$$\frac{2x+5}{2} > y > 0,$$

$$2 \leq x \leq 12,$$

$0 \leq m \leq 12$, und
$1 \leq n \leq 8$ bedeutet, und
$A^{n-}$ ein aliphatisches gesättigtes, ungesättigtes, geradkettiges oder verzweigtes ein oder mehrfunktionelles Carbonsäureanion mit 1 bis 22 Kohlenstoffatomen oder ein aromatisches oder heteroaromatisches ein-oder mehrfunktionelles Carbonsäureanion mit 6 bis 20 Kohlenstoffatomen oder Kombinationen hiervon bedeutet,
ausgenommen y=1, wenn $2 \leq x \leq 8$ ist; und

(c) mindestens ein Polyol und/oder mindestens ein hydroxylgruppenhaltiges Isocyanurat;

wobei die Stabilisatorkombination kein Ethylen/Vinylacetat-Copolymer-Hydrolysat enthält.

Die erfindungsgemäße Stabilisatorkombination wird bevorzugt für polyvinylchlorid (PVC) als halogenhaltiges thermoplastisches Harz verwendet.

Der in der vorliegenden Erfindung verwendete Begriff Polyvinylchlorid umfaßt gebräuchliche Homopolymerisate oder Copolymerisate von Vinylchlorid sowie Abmischungen solcher Polyvinylchloridverbindungen mit anderen Polymermassen. Derartige Polymerisate können auf beliebigen Wegen, beispielsweise durch Suspensions-, Emulsions- oder Blockpolymerisation hergestellt worden sein. Ihr K-Wert kann beispielsweise zwischen 50 und 100 liegen.

Es hat sich gezeigt, daß durch die Verwendung der erfindungsgemäßen Stabilisatorkombination Hart-PVC-Formkörper für Außenanwendungen hergestellt werden können, die eine unerwartet gute Lichtstabilität und Langzeit-Bewitterungsbeständigkeit aufweisen. Die erfindungsgemäße Stabilisatorkombination bewirkt nach dreijähriger Freibewitterung eine geringe Abweichung der Farben von den Anfangsfarbwerten. Desweiteren werden nicht nur die Bewitterungseigenschaften verbessert, sondern auch die Blasenbildung während der Extrusion überraschend minimiert.

Hydrotalcite werden beispielsweise in DE-A-4425266, EP-A-0189899, DE-A-3843581, US-A-4,883,533, EP-A-0407139, DE-A-4031818, DE-A-4110835, DE-A-4117034, EP-A-0522810, DE-A-4439934 und US-A-5,352,723 beschrieben; Verbindungen der allgemeinen Formel (I) werden z.B. in DE-A-4106411 beschrieben; und Verbindungen der

allgemeinen Formel (II) sind z.B. aus DE-A-4106404 bekannt.

Das Carbonsäureanion $A^{n-}$ in der allgemeinen Formel (II) kann beispielsweise gewählt werden aus Anionen der Malon-, Bernstein-, Adipin-, Fumar-, Malein-, Phthal-, Isophthal-, Terephthal-, Pyridin-, Benzoe-, Salicyl-, Tartron-, Äpfel-, Wein-, Acetondicarbon-, Oxalessig-, Aconit-, Zitronen- und Aminosäuren. Bevorzugt sind die Anionen der Fumar- und Phthalsäure, insbesondere werden Fumarate eingesetzt.

In der erfindungsgemäßen Stabilisatorkombination einsetzbare Polyole sind beispielsweise Polyole mit 2 bis 32 C-Atomen und 2 bis 12 Hydroxylgruppen. Bevorzugt können Propylenglykol, Neopentylglykol, Xylit, Mannit, Sorbit, Trimethylolpropan, Pentaerythrit, Dipentaerythrit und Tripentaerythrit eingesetzt werden. Insbesondere bevorzugt sind Trimethylolpropan und Dipentaerythrit.

Das hydroxylgruppenhaltige Isocyanurat kann ausgewählt werden aus Verbindungen der allgemeinen Formel (III)

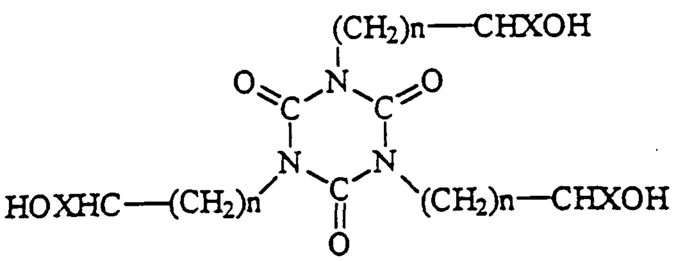

(III)

worin die Gruppen X und die Indices n jeweils gleich oder verschieden sind und n eine ganze Zahl von 0 bis 5, vorzugsweise von 0 bis 3, und X ein Wasserstoffatom oder eine geradkettige oder verzweigte Alkylgruppe mit 1 bis 6, vorzugsweise 1 oder 2, Kohlenstoffatomen bedeutet, wobei mindestens ein Index $n \neq 0$ ist. Vorzugsweise haben alle X und n die gleiche Bedeutung. Bevorzugt wird Tris-(2-hydroxyethyl)isocyanurat verwendet.

Die Komponente (a), d.h. der Hydrotalcit, wird vorzugsweise in einer Menge von 0,01 bis 2 Gewichtsteilen, insbesondere in einer Menge von 0,1 bis 1 Gewichtsteilen, bezogen auf 100 Gewichtsteile des halogenhaltigen thermoplastischen Harzes, eingesetzt.

Die Menge der Komponente (b) beträgt vorzugsweise 0,01 bis 2 Gewichtsteile, insbesondere 0,1 bis 1 Gewichtsteile, bezogen auf 100 Gewichtsteile des halogenhaltigen thermoplastischen Harzes.

Die Komponente (c) wird vorzugsweise in einer Menge von 0,01 bis 2,5 Gewichtsteilen, insbesondere in einer Menge von 0,05 bis 1 Gewichtsteilen, bezogen auf 100 Gewichtsteile des halogenhaltigen thermoplastischen Harzes, eingesetzt.

Die erfindungsgemäße Stabilisatorzusammensetzung kann in beliebiger physikalischer Form z.B. als Pulvermischung, Press-, Sprüh- oder Mikrogranulat, Schuppe oder Pastille vorliegen. Diese Produktformen können entweder aus Pulvermischungen, durch Einwirkung von Druck und/oder Temperatur hergestellten Preßgranulaten, unter Einsatz von Granulierhilfstoffen hergestellte Aufbaugranulaten, oder durch Abkühlung von Schmelzen der erfindungsgemäßen Zusammensetzung zu Schuppen oder Pastillen bzw. durch Absprühen hergestellt werden. Zur Herstellung von halogenhaltigen thermoplastischen Harz-Formmassen, insbesondere von PVC-Formmassen, können die Einzelsubstanzen direkt oder als Mischprodukt in Form einer Pulvermischung oder als Schmelzprodukt oder als Preßgranulat zu einer als Ausgangsmaterial dienenden Harzmischung zugegeben werden. Die halogenhaltige thermoplastische Harz-Formmasse kann dann in an sich bekannter Weise zu Formkörpern geformt werden.

Die erfindungsgemäße Stabilisatorkombination kann mit weiteren Wärme-, Licht- und Alterungsschutzmitteln kombiniert werden. Solche Verbindungen, die üblicherweise als Additive für halogenhaltige thermoplastische Harze verwendet werden, sind beispielsweise Oxide und/oder Hydroxide von Metallen, z.B. Calciumhydroxid oder Zinkoxid; Zeolithe oder zinnhaltige Stabilisatoren. Ferner können organische Stabilisatoren wie 1,3-Diketone bzw. deren Metallsalze, Dihydropyridine, Expoxide und Phosphite und/oder anorganische Stabilisatoren, wie Granate, modifizierte Hydrotalcite oder sonstige Schichtverbindungen verwendet werden.

Die erfindungsgemäßen Stabilisatorkombinationen können in Kombination mit üblicherweise eingesetzten Zuschlagstoffen, wie Füllstoffen (z.B. Kreide, Kaolinit), Pigmenten (z.B. Titandioxid, Zinksulfid), Flammschutzmitteln (z.B. Magnesiumhydroxid, Aluminiumhydroxid, Antimontrioxid), Verstärkungsmitteln (z.B. Glasfasern, Talkum) und Weichmachern (z.B. Phthalat-, Phosphat-, Polymerweichmacher, Chlorparaffine) bei der Herstellung von thermoplastischen Formmassen verwendet werden.

Zur Einstellung der rheologischen Erfordernisse können den halogenhaltigen thermoplastischen Harzen Gleitmittel, wie Paraffinwachse, niedermolekulare Polyolefine, Estergleitmittel aus mono- oder polyvalenten Alkoholen und Mono- oder Dicarbonsäuren oder Amidwachse, zugesetzt werden.

Ferner können den halogenhaltigen thermoplastischen Harzen weitere Additive, wie Antioxidantien, optische Aufheller, UV- und Lichtschutzmittel, wie sterisch gehinderte Amine, und schwefelhaltige Verbindungen, insbesondere die schwefelhaltigen organischen Verbindungen, die zur Herstellung von zinnhaltigen Stabilisatoren verwendet werden, zugesetzt werden.

Die nachfolgenden Beispiele, die in den Rezepturtabellen 1 und 2 beschrieben sind, erläutern die Erfindung. In den Tabellen sind Vergleichsrezepturen mit VB und erfindungsgemäße Rezepturen mit B gekennzeichnet. In den Beispielen wird die Bewitterungsbeständigkeit und die Lichtstabilität von PVC-Formkörpern bestimmt, indem der b-Wert nach DIN 6167 bei Lichtart D65/10 von bewitterten Formkörpern gemessen wird. Für die Bewertung der Bewitterungsstabilität werden die unten beschriebenen PVC-Profil-Rezepturen in der nachfolgend beschriebenen Weise verarbeitet und anschließend untersucht.

Verarbeitung:

Die Rezepturbestandteile und PVC werden in einem handelsüblichen Heiz/Kühl-Mischer bis zu einer Aufbereitungstemperatur von 120°C vermischt und anschließend auf 40°C abgekühlt. Das so hergestellte Dryblend wird dann mittels eines Extruders zu Profilen extrudiert.

Die Bewitterung wird wie nachfolgend beschrieben durchgeführt.

Die nach dem beschriebenen Verfahren erhaltenen Extrudate werden in 1,5×1,5 cm große Stücke geschnitten und einer natürlichen Bewitterung mit einer Gesamtdauer von 3 Jahren zugeführt. Im Abstand von 4 Monaten werden die Probekörper aus der Bewitterung genommen und die Farbwerte der Prüflinge bestimmt. Gemessen wird insbesondere der Gelbwert (b-Wert) der Probekörper nach DIN 6167 bei Normlichtart D 65/10 in Abhängigkeit von der Bewitterungsdauer.

Die Bewitterung wurde in Südfrankreich (Region: 6°, 43° nördliche Breite) unter folgenden Bedingungen durchgeführt:

Neigungswinkel: 45°
Ausrichtung: Süd

Die Stärke der Bläschenbildung wurde anhand der angefertigten Mathisstreifen beurteilt. Zu diesem Zweck wurde ein nach dem obigen Verfahren hergestelltes Extrudat bei 200°C in einem Mathisofen wärmebehandelt. Bei dieser thermischen Belastung des Materials kommt es zum einen zu Verfärbungen und zum anderen entstehen mit zunehmender Dauer vermehrt Bläschen, die von $CO_2$ und Kristallwasser des Hydrotalcits verursacht werden. Als Maß für die Stärke der Blasenbildung wird die Anzahl der Bläschen bestimmt, die nach 25 Minuten auf einem Quadratzentimeter des Mathisstreifens zu finden sind.

Bei diesem Verfahren wird zudem die Größe der Bläschen abgeschätzt. Blasen bis zu einer Größe von 1 mm Durchmesser werden als "klein", Blasen bis 3 mm als "mittel" und Blasen größer als 3 mm als "groß" eingestuft. Es hat sich gezeigt, daß nach diesen Beurteilungskriterium die Stärke der Blasenbildung unterschiedlicher Stabilisatoren, z.B. verschiedener Hydrotalcitarten, gut beurteilt werden kann.

Als Maß für die Stabilisierung wird der HCl-Wert nach DIN VDE 0472 Teil 614 bestimmt (Kongorottest).

Rezepturen 1:

| | VB 1 | VB2 | VB3 | VB 4 | B 1 | B 2 | B 3 | B 4 | B 5 |
|---|---|---|---|---|---|---|---|---|---|
| S-PVC K-Wert 68 | 100 | 100 | 100 | 100 | 100 | 100 | 100 | 100 | 100 |
| Schlagzähmacher[1)] | 7 | 7 | 7 | 7 | 7 | 7 | 7 | 7 | 7 |
| Kreide | 5 | 5 | 5 | 5 | 5 | 5 | 5 | 5 | 5 |
| $TiO_2$ | 4 | 4 | 4 | 4 | 4 | 4 | 4 | 4 | 4 |
| Distearylphthalat | 0,6 | 0,6 | 0,6 | 0,6 | 0,6 | 0,6 | 0,6 | 0,6 | 0,6 |
| Bisphenol A | 0,2 | 0,2 | 0,2 | 0,2 | 0,2 | 0,2 | 0,2 | 0,2 | 0,2 |
| Paraffinwachs | 0,2 | 0,2 | 0,2 | 0,2 | 0,2 | 0,2 | 0,2 | 0,2 | 0,2 |
| Benzylstearoylmethan | 0,2 | 0,2 | 0,2 | 0,2 | 0,2 | 0,2 | 0,2 | 0,2 | 0,2 |

Tabelle fortgesetzt

| | VB 1 | VB2 | VB3 | VB 4 | B 1 | B 2 | B 3 | B 4 | B 5 |
|---|---|---|---|---|---|---|---|---|---|
| Calciumacetylacetonat | 0,2 | 0,2 | 0,2 | 0,2 | 0,2 | 0,2 | 0,2 | 0,2 | 0,2 |
| $Ca_4Al_2(OH)_{12}HPO_3 \cdot 3H_2O$ | - | - | 0,1 | 1,0 | 0,1 | 0,2 | 0,3 | 0,4 | 0,5 |
| Hydrotalcit 2) | 1,0 | 1,0 | 0,9 | - | 0,9 | 0,8 | 0,7 | 0,6 | 0,5 |
| Theic3) | 0,2 | - | - | 0,2 | 0,2 | 0,2 | 0,2 | 0,2 | 0,2 |
| Zinkstearat | 0,8 | 0,8 | 0,8 | 0,8 | 0,8 | 0,8 | 0,8 | 0,8. | 0,8 |

1) BA/MMA-Pfropfcopolymer
2) Alkamizer 1 (Handelsname)
3) Tris-(2-hydroxyethyl)isocyanurat

Tabelle 1 zeigt die Gelbwerte (b-Wert) in Abhängigkeit von der Bewitterungsdauer.

**Tabelle 1: Gelbwerte der Rezepturen 1**

| Anzahl Monate | 0 | 4 | 8 | 12 | 16 | 20 | 24 | 28 | 32 |
|---|---|---|---|---|---|---|---|---|---|
| b-Wert VB1 | 3,6 | 4,9 | 6,5 | 8,3 | 9,6 | 9,9 | 9,2 | 8,1 | 7,4 |
| b-Wert VB2 | 4,2 | 5,3 | 7,4 | 9,9 | 11,3 | 12,7 | 14,2 | 12,4 | 11,6 |
| b-Wert VB3 | 4,0 | 5,3 | 5,9 | 7,6 | 10,3 | 10,5 | 9,7 | 9,6 | 8,5 |
| b-Wert VB4 | 2,7 | 3,5 | 5,3 | 6,2 | 7,6 | 8,9 | 8,7 | 7,4 | 7,4 |
| b-Wert B1 | 3,4 | 3,8 | 4,3 | 5,8 | 6,3 | 6,9 | 7,9 | 6,3 | 6,0 |
| b-Wert B2 | 3,3 | 3,6 | 4,0 | 5,1 | 6,8 | 6,7 | 5,7 | 5,2 | 4,9 |
| b-Wert B3 | 3,0 | 3,6 | 3,9 | 4,7 | 5,4 | 6,3 | 6,1 | 5,7 | 5,1 |
| b-Wert B4 | 2,8 | 3,2 | 3,9 | 4,9 | 5,8 | 7,1 | 6,2 | 6,9 | 5,3 |
| b-Wert B5 | 2,7 | 3,6 | 3,7 | 5,6 | 5,3 | 6,4 | 7,2 | 6,3 | 5,7 |

**Tabelle 2: Anzahl und Art der Blasen und HCl-Wert der Rezepturen 1**

| | VB1 | VB2 | VB3 | VB4 | B1 | B2 | B3 | B4 | B5 |
|---|---|---|---|---|---|---|---|---|---|
| Anzahl Blasen | 26 | 27 | 24 | keine | 23 | 20 | 14 | 12 | 8 |
| Art der Blasen | mittel | mittel | klein | keine | klein | klein | klein | klein | klein |
| HCl-Werte | 35 | 32 | 33 | 26 | 36 | 36 | 34 | 34 | 33 |

Wie aus der Tabelle 1 zu entnehmen ist, wird beim erfindungsgemäßen Beispiel B1 die Anfangsfarbe im Vergleich zu den nicht erfindungsgemäßen Vergleichsbeispielen VB1 bis VB3 verbessert. Mit steigender Einsatzmenge von $Ca_4Al_2(OH)_{12}HPO_3 \cdot 3H_2O$ nimmt der Gelbwert der Extrudate weiter ab und erreicht bei einem Hydrotalcit/$Ca_4Al_2(OH)_{12}HPO_3 \cdot 3H_2O$-Verhältnis von 1:1 den minimalen b-Wert. Die Gelbwerte von VB4 und B5 sind bei einem Verhältnis von 1:1 gleich. Wie aus Tabelle 2 zu entnehmen ist, führt eine weitere Erhöhung der Einsatzmenge zu unerwünscht niedrigen stabilisierenden Eigenschaften.

Während der Bewitterung steigt der Gelbwert sowohl der erfindungsgemäßen Beispiele B1-B5 als auch der Vergleichsbeispiele VB1 bis VB4 an. Die Vergleichsbeispiele VB1 bis VB4 zeigen einen deutlich steileren Anstieg als die erfindungsgemäßen Beispiele B1 bis B5. Durch 10%-ige Substitution von Hydrotalcit durch $Ca_4Al_2(OH)_{12}HPO_3 \cdot 3H_2O$ wird der Anstieg im Gelbwert nach Bewitterung deutlich reduziert. So zeigen nach 16 Monaten, der Hälfte der Bewitterungszeit, die erfindungsgemäßen Beispiele deutlich kleinere Farbänderungen bezüglich der Anfangsfarbe als die Vergleichsbeispiele.

Wie oben beschrieben, werden als Maß für die Blasenbildung die Bläschen gezählt, die bei 25 min im Mathisstreifen auf einem Quadratzentimeter zu finden sind. Wie aus Tabelle 2 zu erkennen ist, verringert sich mit zunehmender

Menge an $Ca_4Al_2(OH)_{12}HPO_3$-$3H_2O$ die Blasenbildung stark. Diese verringerte Blasenbildung im Mathisstreifen bedeutet eine deutliche Verbesserung der Verarbeitungssicherheit für PVC-Formmassen.

Die in den Rezepturen 2 beschriebenen Formulierungen erläutern die Erfindung im Detail.

Rezepturen 2:

| | B6 | B7 | B8 | VB5 | B9 | B10 |
|---|---|---|---|---|---|---|
| S-PVC K-Wert 68 | 100 | 100 | 100 | 100 | 100 | 100 |
| Schlagzähmacher1) | 7 | 7 | 7 | 7 | 7 | 7 |
| Kreide | 5 | 5 | 5 | 5 | 5 | 5 |
| $TiO_2$ | 4 | 4 | 4 | 4 | 4 | 4 |
| Distearylphthalat | 0,6 | 0,6 | 0,6 | 0,6 | 0,6 | 0,6 |
| Bisphenol A | 0,2 | 0,2 | 0,2 | 0,2 | 0,2 | 0,2 |
| Paraffinwachs | 0,2 | 0,2 | 0,2 | 0,2 | 0,2 | 0,2 |
| Benzylstearoylmethan | 0,2 | 0,2 | 0,2 | 0,2 | 0,2 | 0,2 |
| Calciumacetylacetonat | 0,2 | 0,2 | 0,2 | 0,2 | 0,2 | 0,2 |
| $Ca_4Al_2$ (OH) $_{12}HPO_3$-$3H_2O$ | - | - | 0,15 | - | 0,2 | 0,1 |
| $Ca_4Al_2(OH)_{12}$(Fumarat)-$3H_2O$ | 0,1 | 0,3 | 0,15 | - | - | 0,1 |
| Hydrotalcit2) | 0,9 | 0,7 | 0,7 | 1,0 | 0,8 | 0,8 |
| Theic3) | 0,2 | 0,2 | 0,2 | - | - | |
| Polyol TMP4) | - | - | - | 0,2 | 0,2 | 0,2 |
| Zinkstearat | 0,8 | 0,8 | 0,8 | 0,8 | 0,8 | 0,8 |

1) BA/MMA-Propfcopolymer
2) Alkamizer 1 (Handelsname)
3) Tris-(2-hydroxyethyl) isocyanurat
4) Trimethylolpropan

Tabelle 3 zeigt die Gelbwerte (b-Wert) in Abhängigkeit von der Bewitterungsdauer.

**Tabelle 3: Gelbwerte der Rezepturen 2**

| Anzahl Monate | 0 | 4 | 8 | 12 | 16 | 20 | 24 | 28 | 32 |
|---|---|---|---|---|---|---|---|---|---|
| b-Wert B6 | 3,3 | 4,1 | 4,5 | 6,4 | 6,6 | 7,2 | 7,7 | 5,9 | 6,3 |
| b-Wert B7 | 2,8 | 4,1 | 5,4 | 6,2 | 7,1 | 8,0 | 6,5 | 5,7 | 5,5 |
| b-Wert-B8 | 3,0 | 3,8 | 4,0 | 5,1 | 6,8 | 7,6 | 7,0 | 5,4 | 5,9 |
| b-Wert VB5 | 3,6 | 5,4 | 7,0 | 8,1 | 10,7 | 9,2 | 9,1 | 8,3 | 6,3 |
| b-Wert B9 | 3,3 | 4, 1 | 5,2 | 6,3 | 6,7 | 7,1 | 5,4 | 6,0 | 5,8 |
| b-Wert B10 | 3,1 | 3,6 | 4,3 | 5,1 | 6,8 | 6,7 | 5,7 | 5,2 | 4,6 |

**Tabelle 4: Anzahl, Art der Blasen und HCl-Wert der Rezepturen 2**

| | B6 | B7 | B8 | VB5 | B9 | B10 |
|---|---|---|---|---|---|---|
| Anzahl Blasen | 19 | 6 | 8 | 33 | 19 | 23 |
| Art der Blasen | klein/mittel | klein | klein | mittel | klein | klein |
| HCl-Wertel | 37 | 35 | 35 | 34 | 34 | 34 |

Die Beispiele B6 bis B8 zeigen, daß auch mit Calcium/Aluminium/Hydroxy-Carboxylaten die gleichen positiven Effekte zu erzielen sind, wie mit Calcium/Aluminium/Hydroxy-Phosphiten. Die Anfangsfarben verbessern sich im Vergleich zu VB1 oder VB5 deutlich. Auch nach Bewitterung ist der Anstieg der Gelbwerte der Beispiele B6 bis B8 niedriger als bei den Vergleichsbeispielen VB1 bis VB4. Bei Einsatz von $Ca_4Al_2(OH)_{12}$(Fumarat)-$3H_2O$ werden zudem weniger Blasen gefunden. Die Stabilisierung wird bei diesen Einsatzmengen nicht beeinträchtigt.

In den Beispielen B9 und B10 wurde als weiteres Polyol TMP den Vergleichsbeispielen VB5 und VB3 gegenübergestellt. Auch hier zeigt sich, daß die Kombination von Polyol mit $Ca_4Al_2(OH)_{12}$(Fumarat)-$3H_20$ und/oder $Ca_4Al_2(OH)_{12}HPO_3$-$3H_2O$ und Hydrotalcit deutlich bessere Bewitterungseigenschaften und geringere Blasenbildung zeigt.

## Patentansprüche

**1.** Stabilisatorkombination für halogenhaltige thermoplastische Harze, umfassend

a. mindestens einen natürlichen oder synthetischen Hydrotalcit, der gegebenenfalls oberflächenmodifiziert ist,
b. mindestens eine basische Calcium-Aluminium-Hydroxyverbindung, gewählt aus

b1. basischen Calcium-Aluminium-Hydroxyphosphiten der allgemeinen Formel (I)

$$Ca_xAl_2(OH)_{2(x+3-y)}(HPO_3)_y \cdot m\ H_2O \qquad (I)$$

worin $2 \leq x \leq 12$, $(2x + 5) / 2 > y > 0$ und $0 \leq m \leq 12$ bedeutet, ausgenommen y = 1, wenn $2 \leq x \leq 8$ ist; und/oder
b2. basischen Calcium-Aluminium-Hydroxycarboxylaten der allgemeinen Formel (II)

$$Ca_xAl_2(OH)_{2x+6-y}A_{y/n}{}^{n-} \cdot m\ H_2O \qquad (II)$$

worin $2 \leq x \leq 12$, $(2x + 5) / 2 > y > 0$,$0 \leq m \leq 12$ und $1 \leq n \leq 8$ bedeutet, und $A^{n-}$ ein aliphatisches gesättigtes, ungesättigtes, geradkettiges oder verzweigtes ein- oder mehrfunktionelles Carbonsäureanion mit 1 bis 22 Kohlenstoffatomen oder ein aromatisches oder heteroaromatisches ein- oder mehrfunktionelles Carbonsäureanion mit 6 bis 20 Kohlenstoffatomen oder Kombinationen hiervon bedeutet, ausgenommen wenn y = 1, wenn $2 \leq x \leq 8$ ist; und

c. mindestens ein Polyol und/oder mindestens ein hydroxylgruppenhaltiges Isocyanurat;

wobei die Komponente a. in einer Menge von 0,1 bis 2 Gewichtsteilen, bezogen auf 100 Gewichtsteile des halogenhaltigen thermoplastischen Harzes, eingesetzt wird und
wobei die Stabilisatorkombination kein Ethylen/Vinylacetat-Copolymer-Hydrolysat enthält.

**2.** Stabilisatorkombination nach Anspruch 1, **dadurch gekennzeichnet, dass** sie die Komponente b. in einer Menge von 0,01 bis 2 Gewichtsteilen, bezogen auf 100 Gewichtsteile des halogenhaltigen thermoplastischen Harzes, enthält.

**3.** Stabilisatorkombination nach Anspruch 1 oder 2, **dadurch gekennzeichnet, dass** sie die Komponente c. in einer Menge von 0,01 bis 2,5 Gewichtsteilen, bezogen auf 100 Gewichtsteile des halogenhaltigen thermoplastischen Harzes, enthält.

**4.** Stabilisatorkombination nach einem der Ansprüche 1 bis 3, **dadurch gekennzeichnet, dass** das Polyol gewählt wird aus Polyolen mit 2 bis 32 C-Atomen und 2 bis 12 Hydroxylgruppen.

**5.** Stabilisatorkombination nach einem der Ansprüche 1 bis 4, **dadurch gekennzeichnet, dass** das hydroxylgruppenhaltige Isocyanurat gewählt wird aus Verbindungen der allgemeinen Formel (III)

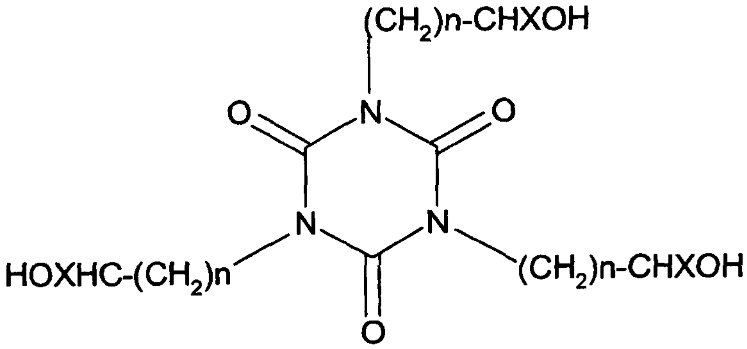

III

worin die Gruppen X und die Indices n jeweils gleich oder verschieden sind und n eine ganze Zahl von 0 bis 5 und X ein Wasserstoffatom oder eine geradkettige oder verzweigte Alkylgruppe mit 1 bis 6 Kohlenstoffatomen bedeutet, wobei mindestens ein Index $n \neq 0$ ist.

## Claims

**1.** Stabiliser combination for halogen-containing thermoplastic resins, comprising

a. at least one natural or synthetic hydrotalcite, which is optionally surface modified,
b. at least one basic calcium-aluminium-hydroxy compound, selected from

b1. basic calcium-aluminium-hydroxyphosphites of the general Formula (I)

$$Ca_xAl_2(OH)_{2(x+3-y)}(HPO_3)_y \cdot m\ H_2O \qquad (I)$$

wherein $2 \leq x \leq 12$, $(2x + 5) / 2 > y > 0$ and $0 \leq m \leq 12$, with the exception of $y = 1$ if $2 \leq x \leq 8$; and/or
b2. basic calcium-aluminium-hydroxycarboxylates of the general formula (II)

$$Ca_xAl_2(OH)_{2x+6-y}A_{y/n}{}^{n-} \cdot m\ H_2O \qquad (II)$$

wherein $2 \leq x \leq 12$, $(2x+5)/2>y>0, 0 \leq m \leq 12$ and $1 \leq n \leq 8$, and $A^{n-}$ is an aliphatic saturated, unsaturated, linear or branched mono- or multifunctional carboxylic acid anion having 1 to 22 carbon atoms or an aromatic or heteroaromatic mono- or multifunctional carboxylic acid anion having 6 to 20 carbon atoms or a combination thereof, with the exception of $y = 1$ if $2 \leq x \leq 8$; and

c. at least one polyol and/or at least one hydroxyl-group-containing isocyanurate; whereas the component a is applied in an amount of from 0.1 to 2 parts by weight, based on 100 parts by weight of the halogen-containing thermoplastic resin and whereas the stabiliser combination does not comprise an ethylene / vinyl acetate copolymer hydrolyzate.

**2.** Stabiliser combination according to claim 1, **characterized in that** it comprises the component b in an amount of from 0.01 to 2 parts by weight, based on 100 parts by weight of the halogen-containing thermoplastic resin.

**3.** Stabiliser combination according to claim 1 or 2, **characterized in that** it contains the component c in an amount of from 0.01 to 2.5 parts by weight, based on 100 parts by weight of the halogen-containing thermoplastic resin.

**4.** Stabiliser combination according one of the claims 1 to 3, **characterised in that** the polyol is selected from polyols having 2 to 32 carbon atoms and 2 to 12 hydroxyl groups.

**5.** Stabiliser combination according to one of the claims 1 to 4, **characterised in that** the hydroxyl-group-containing isocyanurate is selected from compounds of the general formula (III)

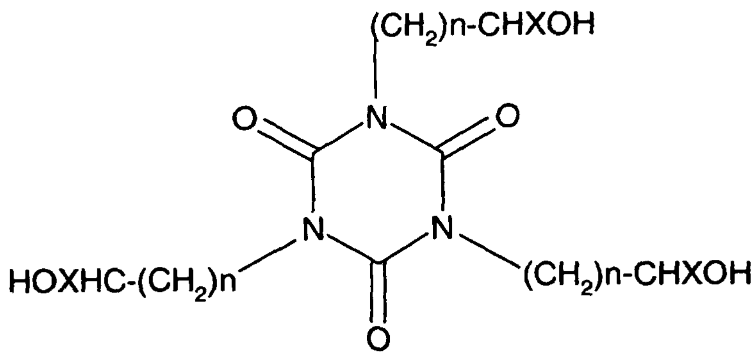

III

wherein the groups X and the indices n are identical or different, respectively and n represents a an integer from 0 to 5 and X represents a hydrogen atom or a linear or branched alkyl group having 1 to 6 carbon atoms, whereas at least one index n # 0.

## Revendications

**1.** Combinaison de stabilisants pour des résines halogénées thermoplastiques, comportant

a. au moins une hydrotalcite naturelle ou synthétique, laquelle est le cas échéant modifiée en surface,
b. au moins un composé de hydroxyle basique de calcium-aluminium, choisi parmi

b1. des hydroxyphosphites basiques de calcium-aluminium ayant la formule générale (I)

$$Ca_xAl_2(OH)_{2(x+3-Y)}(HPO_3)_y \cdot m\ H_2O\ (I) \qquad (I)$$

dans laquelle 2 ≤ x ≤ 12, (2x + 5) / 2 > y > 0 et 0 ≤ m ≤ 12, à l'exception de y = 1 si 2 ≤ x ≤ 8; et/ou
b2. des hydroxy-carboxylates basiques de calcium-aluminium ayant la formule générale (II)

$$Ca_xAl_2(OH)_{2x+6-y}A_{y/n}^{n-} \cdot m\ H_2O\ (II) \qquad (II)$$

dans laquelle 2 ≤ x ≤ 12, (2x + 5) / 2 > y > 0,0 ≤ m ≤ 12 et 1 ≤ n ≤ 8, et $A^{n-}$ signifie un anion d'acide carboxylique aliphatiques monofonctionnel ou multifonctionnel, saturé, insaturé, linéaire ou ramifié, avec 1 à 22 atomes de carbone, ou un anion d'acide carboxylique aromatique ou hétéroaromatique, monofonctionnel ou multifonctionnel, avec 6 à 20 atomes de carbone, ou des combinaisons de ceux-ci, à l'exception de y = 1 si 2 ≤ x ≤ 8; et

c. au moins un polyol et/ou au moins un isocyanurate contenant des groupes hydroxyles,

dans laquelle le composant a. est employé dans une quantité de 0,1 à 2 parties en poids, relative à 100 parties en poids de la résine halogénée thermoplastique et dans laquelle la combinaison de stabilisants ne contient pas de hydrolysat de copolymère d'éthylène/vinyl acétate.

**2.** Combinaison de stabilisants selon la revendication 1, **caractérisée en ce qu'**elle contient le composant b. dans une quantité de 0,01 à 2 parties en poids, relative à 100 parties en poids de la résine halogénée thermoplastique.

**3.** Combinaison de stabilisants selon la revendication 1 ou 2, **caractérisée en ce qu'**elle contient le composant c. dans une quantité de 0,01 à 2,5 parties en poids, relative à 100 parties en poids de la résine halogénée thermoplastique.

**4.** Combinaison de stabilisants selon l'une des revendications 1 à 3, **caractérisée en ce que** le polyol est choisi parmi des polyols avec 2 à 32 atomes de carbone et 2 à 12 groupes hydroxyles.

**5.** Combinaison de stabilisants selon l'une des revendications 1 à 4, **caractérisée en ce que** l'isocyanurate contenant des groupes hydroxyles est choisi parmi des composés ayant la formule générale (III)

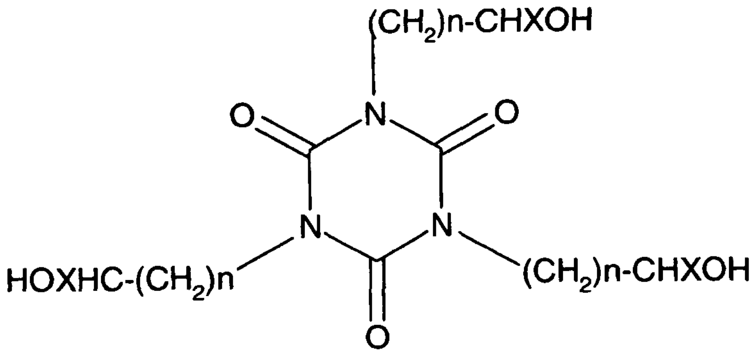

III

dans laquelle les groupes X et les indices n sont respectivement pareils ou différents et n signifie un nombre entier de 0 à 5 et X signifie un atome d'hydrogène ou un groupe alkyle linéaire ou ramifié avec 1 à 6 atomes de carbone, dans laquelle au moins un index n # 0.